Europäisches Patentamt

European Patent Office

Office européen des brevets

(11) Veröffentlichungsnummer: **0 305 413 B1**

## EUROPÄISCHE PATENTSCHRIFT

(45) Veröffentlichungstag der Patentschrift: **12.05.93**

(51) Int. Cl.5: **C08L 23/02**, C08K 5/00

(21) Anmeldenummer: **88901405.6**

(22) Anmeldetag: **19.02.88**

(86) Internationale Anmeldenummer:
**PCT/CH88/00042**

(87) Internationale Veröffentlichungsnummer:
**WO 88/06609 (07.09.88 88/20)**

Die Akte enthält technische Angaben, die nach
dem Eingang der Anmeldung eingereicht wurden
und die nicht in dieser Patentschrift enthalten sind.

(54) **ABBAUBARE KUNSTSTOFFZUSAMMENSETZUNGEN.**

(30) Priorität: **27.02.87 CH 747/87**

(43) Veröffentlichungstag der Anmeldung:
**08.03.89 Patentblatt 89/10**

(45) Bekanntmachung des Hinweises auf die
Patenterteilung:
**12.05.93 Patentblatt 93/19**

(84) Benannte Vertragsstaaten:
**AT BE CH DE FR GB IT LI LU NL SE**

(56) Entgegenhaltungen:
**DE−A− 1 694 017**
**US−A− 3 994 855**
**US−A− 4 125 495**

**Journal of Applied Polymer Science, vol. 23,
1979, John Wiley & Sons, Inc., Z. Osawa et
al.: "The effect of transition metal stearates
on the photodegradation of polyethylene",
pages 3583−3590**

(73) Patentinhaber: **Ecotek International Ltd.
181 Cooper Avenue
Tonawanda, N.Y. 14150(US)**

(72) Erfinder: **CHIOUET, André
Route des Dailles 41
CH−1752 Villars−sur−Glâne(CH)**

(74) Vertreter: **Justitz−Wormser, Daisy P.,
Dipl.−Chem. et al
PATENTANWALTS−BUREAU ISLER AG
Postfach 6940
CH−8023 Zürich (CH)**

EP 0 305 413 B1

**Beschreibung**

Die Erfindung betrifft eine Kunststoffzusammensetzung, deren polymere Komponente ein thermoplastisches Polymer, insbesondere ein Polymer von $\alpha$-Olefinen, vorzugsweise Polyaethylen oder Aethylenkopolymeren, umfasst, die entweder unter Einwirkung von Wärme und/oder von ultraviolettem Licht und/oder von Sonnenlicht und/oder unter Kompostierbedingungen zu kleinen Teilen zerfällt. Da diese Kunststoffzusammensetzung auch eine natürliche, biologisch abbaubare Substanz enthält, werden die entstandenen kleinen Kunststoffteile durch Mikroorganismen wie Bakterien, Pilze und/oder Enzyme, die in einem Kompostiergemisch oder in der Erde vorhanden sind, noch weiter abgebaut. Unter geeigneten Bedingungen kann somit ein vollständiger Abbau erreicht werden.

Das Ziel der vorliegenden Erfindung besteht darin, eine Kunststoffzusammensetzung für Filme, Folien oder andere Formteile zu realisieren, welche die gewünschten Eigenschaften von bisher bekannten, thermoplastischen Kunststoffmaterialien, wie z.B. einfache Verarbeitung, hohe Festigkeit, Wasserdichtigkeit, gute Resistenz gegen Lösungsmittel und andere Chemikalien, aufweisen, die während der Lagerung und des Gebrauchs die gestellten Anforderungen erfüllen, die jedoch nach Gebrauch unter den oben erwähnten Bedingungen rasch abgebaut werden können. Unter vergleichbaren Bedingungen wird die Abbauzeit der erfindungsgemässen Zusammensetzungen im Vergleich zu bisher bekannten Produkten ähnlicher Art um mindestens die Hälfte, oft um 2/3 oder noch mehr herabgesetzt.

Aus der britischen Patentschrift Nr. 1.485.833 ist zu entnehmen, dass Kunststoffe mit Kohlenstoff-Kohlenstoff-Bindungen durch Zugabe von a) Stärkegranulaten oder von chemisch modifizierten Stärkegranulaten und b) einer oxidierbaren Substanz, wie einer Fettsäure und/oder einem Fettsäureester, biologisch abbaubar gemacht werden können. In dieser Druckschrift ist auch erwähnt, dass die oxidierbare Substanz in Berührung mit einem in der Erde enthaltenen Uebergangsmetallsalz zu Peroxid oder Hydroperoxid oxidiert wird, worauf eine Polymerkettenspaltung eintritt.

Es hat sich aber gezeigt, dass bei einer Polyäthylenfolie dieser Zusammensetzung die meisten Stärkegranulate mit einer Polyäthylenschicht bedeckt sind und somit von den Mikroorganismen kaum angegriffen werden können.

Es hat sich ferner gezeigt, dass unter üblichen Kopostierbedingungen eine ungenügende Konzentration an Uebergangsmetallsalzen in der Erde vorhanden ist, um eine wirksame Oxidation der Fettsäurekomponente zu verursachen.

Aus der DE-OS 22 44 801 ist zu entnehmen, dass unter der Einwirkung von ultraviolettem Licht und/oder Sonnenlicht der Abbau von thermoplastischen Polymeren von $\alpha$-Olefinen, insbesondere Polyäthylen und Polystyrol, dadurch beschleunigt werden kann, dass Verbindungen eines Uebergangsmetalls, insbesondere Eisenverbindungen, zugesetzt werden, wobei der wirksame Gehalt mit 0,01 bis 2,0 Gew.-% angegeben wird. Es hat sich jedoch gezeigt, dass diese Metallverbindungen inert sind unter Lichtausschluss bei normalen äusseren Temperaturen (unterhalb 35°C).

Es wurde nun überraschenerweise festgestellt, dass

1) sich eine Kunststoffzusammensetzung auf Basis von thermoplastischen Polymeren von $\alpha$-Olefinen, die

a) eine biologisch abbaubare Substanz, z.B. Stärke,

b) eine in der Zusammensetzung lösliche, gegebenenfalls komplexe Eisenverbindung, die als Initiator wirkt und den weiteren Abbau fördert, und

c) eine oxidierbare Substanz mit einer oder mehreren Doppelbindungen, welche als Abbauförderer und als Kettenspalter wirkt, wobei diese Substanz eine Fettsäure, ein Fettsäureester oder ein Gemisch davon ist, enthält,

unter dem Einfluss von Wärme (>50°C) und/oder ultraviolettem Licht und/oder Sonneneinstrahlung und/oder Kompostierbedingungen abbaut:

2) dieser Abbau bedeutend schneller erfolgt als jener, der gemäss den oben etwähnten Patenten gemessen wurde, (s. die nachfolgenden Tabellen), d.h., dass die gleichzeitige Anwesenheit einer biologisch abbaubaren Substanz, einer oxidierenden Substanz und einer Eisenverbindung einen bedeutenden Synergie-Effekt erzielt;

3) die zusätzliche Anwesenheit einer weiteren Uebergangsmetallverbindung, wie u.B. Kupfer(II)-Stearat, eine katalytische Wirkung auf diesen Abbau ausübt und zwar durch Beschleunigung des Zyklus Fe(III)→Fe(II)→Fe(III) (s. Gleichungen 2-4 weiter unten).

Die vorliegende Erfindung ist in Anspruch 1 und deren bevorzugten Ausführungsformen sind in den Ansprüchen 2-7 definiert.

Als Komponente a) eignen sich biologisch abbaubare Substanzen, wie z.B. natürliche Stärke, verätherte oder veresterte Stärke oder auf andere Weise, z.B. mittels Silanen modifizierte Stärke, wobei der

EP 0 305 413 B1

Gehalt im allgemeinen 2 bis 40 Gew.−%, vorzugsweise 10 bis 16 Gew.−% der Zusammensetzung beträgt. Auch andere Kohlehydrate können für den gewünschten Zweck verwendet werden. Es hat sich als vorteilhaft erwiesen, die biologisch abbaubare Substanz in Form von Granulat zu verwenden, welche auf bekannte Weise vollständig homogen in die Kunststoffmasse verarbeitet werden kann.

Die Komponente c) ist eine oxidierbare Substanz, die mindestens eine Doppelbindung enthält, wobei diese Substanz eine Fettsäure und/oder ein Fettsäureester ist oder enthält. Ein sehr geeignetes Beispiel ist natürliches Sojaöl. Der Gehalt an dieser oxidierbaren Substanz beträgt im allgemeinen bis zu 5 Gew.−%, vorzugsweise 0,5 bis 1,5 Gew.−%, bezogen auf die Zusammensetzung.

Die Eisenverbindung, welche die Komponente b) darstellt, entspricht der allgemeinen Formal $X-Fe$, in welcher X einen oder mehrere Liganden darstellt, wobei die Verbindung zusätzlich mit einem weiteren Liganden Y gekoppelt sein kann. Mit Fe wird hier Eisen in jeder bekannten Wertigkeit bezeichnet. Der Ligand X kann ein anorganischer oder organischer Säurerest sein, ebenso wie ein komplex gebundener anderer Ligand. Als Beispiele können erwähnt werden: $OH^-$, $Cl^-$, $Br^-$, $I^-$, $Oxalat^-$, $H-Citrat^-$, $NO_2-$, $N_3-$, EDTA oder ein Karbonyl−, Nitrosyl− oder Porphyrinrest. Geeignete Liganden Y sind z.B. Karbonsäureionen von aromatischen oder aliphatischen Monokarbonsäuren oder von Dikarbonsäuren, wobei die aliphatische Karbonsäure vorzugsweise 10 bis 20 Kohlenstoffatome enthält. Der Ligand Y dient im allgemeinen dazu, die Löslichkeit der Verbindung $X-Fe$ im Polymer zu erhöhen. Der Gehalt an Komponente c) beträgt im allgemeinen mindestens 0,01 Gew.−%, vorzugsweise 0,15 bis 0,5 Gew.−% bezogen auf die Zusammensetzung. Der Gehalt kann 0,02, 0,03, 0,04 Gew.−% betragen, er kann aber auch 5,0 Gew.−% übersteigen.

Der gegebenenfalls zugesetzte Katalysator ist eine gegebenenfalls komplexe Uebergangsmetallverbindung der allgemeinen Formel $Z'-Me$, in welcher Me ein Uebergangsmetall mit Ausnahme von Fe und Z' einen oder mehrere Liganden bezeichnet. Als Beispiele für den Liganden Z' können erwähnt werden: $OH^-$, $Cl^-$, $Br^-$, $I^-$, $Oxalat^-$, $H-Citrat^-$, $NO_2-$, $N_3-$, EDTA sowie Karbonsäureionen aromatischer oder aliphatischer Mono− oder Dikarbonsäuren, wobei die aliphatische Karbonsäure vorzugsweise 10 bis 20 Kohlenstoffatome aufweist. Als Uebergangsmetall Me eignen sich hauptsächlich die Uebergangsmetalle der ersten Uebergangsmetallreihe des periodischen Systems, wie Kupfer und Vanadium. Der Gehalt an dieser Katalysatorkomponente beträgt mindestens 0,005, vorzugsweise 0,005 bis 1,0 Gew.−%, insbesondere 0,01 bis 0.05 Gew.−%.

Die thermoplastische Grundmasse besteht im wesentlichen aus jedem bekannten thermoplastischen Polymer, wobei Polymere von $\alpha-$Olefinen, insbesondere Polyäthylen oder Aethylen−Copolymere, bevorzugt werden. Unter "Polyäthylen" sind hier alle Typen von Polyäthylen zu verstehen, wie LDPE, LLDPE, LMDPE, MDPE, HDPE, ULDPE usw. Geeignete Aethylen−Copolymere sind z.B. EVA, EBA, EAA, EMAA und Ionomere.

Die vorliegende Erfindung bietet den Vorteil, dass durch Variieren der Konzentration der einzelnen Komponenten der Abbau je nach Anwendungsgebiet gesteuert werden kann, ohne dass das Kunststoffmaterial unter den üblichen Anwendungsbedingungen eine Einbusse an seinen Eigenschaften erleidet. Besonders interessante Anwendungsgebiete für die erfindungsgemässen Zusammensetzungen sind Verpakkungsmaterialien, Folien für Kehrichtsäcke für kompostierbare Abfälle, Folien für die Landwirtschaft, insbesondere solche, die mit der Erde in Berührung kommen und nach einer gewünschten Zeit zerfallen sollen, Folien für Tragtaschen, Baufolien, Kunststoff−Fasern und Kunststoffbändchen, insbesondere gerechte Kunststoffbändchen, usw.

Die vorliegende Erfindung ermöglicht es, umweltfreundliche Produkte herzustellen, welche ohne zusätzlichen Energieaufwand und ohne Freisetzung schädlicher Stoffe abgebaut werden können.

Die Herstellung der erfindungsgemässen Zusammensetzungen und ihre Verarbeitung zu Folien, Filmen, Platten oder anderen Körpern erfolgt nach üblichen Methoden. Mit Vorteil werden die Komponenten einzeln oder in Gemischen in Form von sog. Masterbatches zugesetzt.

Soweit bisher bekannt ist oder als wahrscheinlich angenommen werden kann, erfolgt der Abbau nach folgendem Mechanismus :

Bekanntlich (A. C. Albertsson, B. Ranby, J. Appl. Polym. Sci : Appl. Polym. Symp., 35 (1979), Seite 423 und darin erwähnte Artikel von A. C. Albertsson) sind Kunststoffe mit $C-C-$Bindungen in der Hauptkette äusserst langsam biologisch unter Bildung von $CO_2$ und $H_2O$ abbaubar. Die Halbwertszeit für Polyäthylen wird auf ca. 100 Jahre extrapoliert.

Unter der Einwirkung von ultraviolettem Licht, Sonnenlicht, Wärme oder unter Kompostierbedingungen werden wegen der Anwesenheit der Eisenionen Radikale gebildet, wie z.B. $OH^{\cdot}$, die mit den Polymeren unter Bildung anderer Radikale reagieren können. Diese Polymerradikale sind äusserst reaktionsfähig und können unter anderem mit Sauerstoff, mit anderen Polymerketten, mit Eisenionen, mit einer Doppelbindung der oxidierbaren Substanz usw. weiterreagieren. Dabei werden Polymerketten gespalten, wobei kleine

3

Ketten mit oder ohne Sauerstoff enthaltenden Gruppen, wie Alkohole, Ketone, Ester, usw. entstehen. Während dieses Vorganges wirken die Eisenionen sowohl als Initiator wie auch als Reaktionsförderer, während die oxidierbare Substanz als Reaktionsförderer und insbesondere als Kettenspalter wirken, da diese Substanz besser als eine gesättigte Polymerkette zur Bildung von Peroxy − oder Hydroxyperoxy − Verbindungen neigt, und die Stärke wegen der Vielzahl ihrer Hydroxygruppen in ihrer Zusammensetzung als Förderer und, in Verbindung mit den Eisenionen, als besonders wertvoller Co − Initiator in Erscheinung tritt, da Eisen(III) − hydroxid − Komplexe sehr reaktonsfähig sind. Dies lässt sich durch die folgende Glei − chung (1) veranschaulichen:

$$Fe^{3+}OH^- \rightarrow [FeOH]^{2+} \rightarrow Fe^{2+} + OH^{\cdot} \qquad (1)$$

Die beobachtete katalytische Wirkung der Uebergangsmetallverbindungen, z.B. Kupfer − oder Vanadium − verbindungen, ist wahrscheinlich auf eine Beschleunigung des Zyklus $Fe^{3+} \rightarrow Fe^{2+} \rightarrow Fe^{3+}$ zurückzuführen. Ohne diese Verbindungen wird das gemäss Gleichung (1) gebildete $Fe^{2+}$ durch andere Radikale oder andere Zwischenprodukte auf Kosten der Kettenspaltung reoxidiert, wie z.B. in Gleichung (2) dargestellt:

$$Fe^{2+} + ROOH \rightarrow Fe^{3+} + OH^- + RO \qquad (2)$$

In Anwesenheit von Kupferverbindungen wird das gebildete $Fe^{2+}$ schneller reoxidiert gemäss Gleichung (3):

$$Fe^{2+} + Cu^{2+} \rightarrow Fe^{3+} + Cu^+ \qquad (3)$$

wobei $Cu^+ −$ Ionen sich mit Radikalen sehr schnell zu $Cu^{2+} −$ Ionen reoxidieren:

$$Cu^+ + RO^{\cdot} \rightarrow Cu^{2+} + RO^- \qquad (4)$$

Dieser Vorgang wiederholt sich so lange die Zusammensetzung demultravioletten Licht, und/oder dem Sonnenlicht und/oder der Wärme ausgesetzt ist. In dieser, als erste Phase zu bezeichnenden Phase werden die Kunststoffmaterialien spröde und brüchig und zerfallen zu kleinen Teilen von einigen $mm^2$ bis zu einigen $cm^2$. Diese Phase dauert im allgemeinen je nach den herrschenden Bedingungen 10 bis 60 Tage.

In einer anschliessenden 2. Stufe lässt sich folgendes beobachten:

A) Unter Einwirkung von ultraviolettem Licht, und/oder Sonnenlicht und/oder Wärme verläuft der Abbauprozess wie in der 1. Stufe weiter. Die kleinen Teile zerfallen weiter zu immer kleineren Teilen bis zum Verschwinden.

B) In Anwesenheit von Mikroorganismen, d.h. von Bakterien, Pilzen und/oder Enzymen, wie sie unter Kompostierbedingungen oder in Berührung mit Erde auftreten, folgt eine weitere Abbaustufe. Durch das Verfallen in kleine Teilchen ist die Angriffsfläche der Stärke für die Mikroorganismen um ein Mehrfaches vergrössert. Die Stärke wird vollständig biologisch abgebaut, während die sauerstoffhaltigen, gespalte − nen Polymerketten wenigstens teilweise abgebaut werden. Je nach den herrschenden Bedingungen können sich die Abbauvorgänge der 1. Stufe weiter fortsetzen, was zu noch kürzeren sauerstoffhaltigen Polymerketten führt, die infolge des engen Kontaktes mit den Mikroorganismen bzw. Enzymen wiederum teilweise weiter abgebaut werden. Auf diese Weise kann ein vollständiger biologischer Abbau am Ende der zweiten Stufe erreicht werden. Dies erfolgt im allgemeinen z.B. unter üblichen Kompostierbedingun − gen, die Temperaturen bis 75 − 80˚ C umfassen und im Laufe von 6 bis 8 Monaten allmählich die Aussentemperatur erreichen.

Ein solcher zweistufiger Abbau empfiehlt sich besonders im Fall von Landwirtschaftsfolien, die mit der Erde in Berührung stehen, oder von verstreuten Abfällen. Nach der 1. Stufe sind die Kunststoffteile dann so klein, dass sie innerhalb der Erde noch weiter zerfallen. Dies würde bei konventionellen, photoabbaubaren Kunststoffzusammensetzungen nicht erfolgen.

Beispiele

Die Filme A − I wurden nach dem Blasfilmverfahren auf übliche Weise unter Verwendung von Master − batches hergestellt. Sie wiesen alle dieselbe Dicke auf. Film A enthielt keinen, den Abbau fördernden Zusatz. Die Filme B und C, welche nicht alle erforderlichen Zusätze enthielten, dienen als Vergleichsversu − che. Die unterschiedlichen Gehalte an silikonmodifizierter Stärke, Eisenhydroxidstearat, Sojaöl und Kupfer − stearat sind aus Tabelle 1 ersichtlich. Die Veränderung der Reisskraft und Reissdehnung bei 65˚ C sowie unter Kompostierbedingungen in Abhängigkeit von der Zeit wurde für jede Zusammensetzung gemessen. Bei einer Reissdehnung von weniger als 5 % in der Querrichtung ist das Produkt derart brüchig, dass keine Messungen mehr durchgeführt werden können, so dass der Film als abgebaut betrachtet werden kann.

Die Resultate der Untersuchungen sind aus den folgenden Tabellen 2 und 3 ersichtlich.

Tabelle 1: Filmzusammensetzungen

Zusätze in Gew.-%

| Zusammen-setzung Nr. | Stärke | FeOH(stearat)$_2$ | Sojaöl | Cu(stearat)$_2$ |
|---|---|---|---|---|
| A | – | – | – | – |
| B | 10 | – | 0,5 | – |
| C | – | 0,5 | – | – |
| D | 10 | 0,5 | 0,5 | – |
| E | 10 | 1,0 | 0,5 | – |
| F | 16 | 0,5 | 0,8 | – |
| G | 10 | 1,5 | 0,5 | – |
| H | 10 | 0,5 | 1,0 | – |
| I | 10 | 0,5 | 0,5 | 0,025 |

Kunststoff: LDPE ; MFI 1,2

Veränderung der Reisskraft und Reissdehnung bei 65°C

Tabelle 2 ∝

| Reisskraft in N | | A | B | C | D |
|---|---|---|---|---|---|
| Original | längs | 30.1 | 19.6 | 29.3 | 19.2 |
|  | quer | 28.5 | 17.6 | 27.3 | 19.0 |
| 6 Tagen | längs | 29.3 | 18.6 | 18.7 | 17.6 |
|  | quer | 28.8 | 17.9 | 19.6 | 13.7 |
| 10 Tagen | längs | 30.7 | 17.7 | 16.0 | 15.1 |
|  | quer | 27.9 | 16.6 | 13.7 | 12.2 |
| 15 Tagen | längs | 30.5 | 19.1 | 15.5 | 14.0 |
|  | quer | 28.9 | 16.1 | 14.0 | 12.5 |
| 20 Tagen | längs | 29.2 | 18.1 | 14.3 | 13.5 |
|  | quer | 27.9 | 15.5 | 14.4 | 13.0 |
| 30 Tagen | längs | 30.0 | 18.5 | 13.6 | 12.5 |
|  | quer | 28.5 | 15.8 | 14.0 | 12.1 |

| Reissdehnung in % | | A | B | C | D |
|---|---|---|---|---|---|
| Original | längs | 390 | 233 | 258 | 232 |
|  | quer | 515 | 530 | 520 | 531 |
| 6 Tagen | längs | 402 | 239 | 217 | 167 |
|  | quer | 505 | 539 | 437 | 346 |
| 10 Tagen | längs | 388 | 226 | 95 | 86 |
|  | quer | 508 | 518 | 109 | 27 |
| 15 Tagen | längs | 395 | 195 | 67 | 22 |
|  | quer | 520 | 500 | 47 | 11 |
| 20 Tagen | längs | 375 | 203 | 54 | 15 |
|  | quer | 495 | 462 | 41 | 9 |
| 30 Tagen | längs | 385 | 185 | 44 | 10 |
|  | quer | 495 | 430 | 37 | 5.8 |

Veränderung der Reisskraft und Reissdehnung bei 65°C

6

Tabelle 2 *a* (Fortsetzung)

| Reisskraft in N | | E | F | G | H | I |
|---|---|---|---|---|---|---|
| Original | längs | 13.8 | 14.0 | 14.2 | 19.5 | 19.8 |
|  | quer | 9.3 | 8.9 | 9.8 | 19.1 | 18.9 |
| 10 Tagen | längs | 11.8 | 10.7 | 9.6 | 15.5 | 14.5 |
|  | quer | 8.7 | 8.0 | 9.5 | 13.0 | 13.5 |
| 20 Tagen | längs | 10.5 | 9.8 | 9.1 | 12.5 | 13.2 |
|  | quer | 9.2 | 7.9 | 8.1 | 12.0 | 12.2 |
| 25 Tagen | längs | 9.5 | 8.8 | 8.3 | 12.0 | 12.5 |
|  | quer | 8.2 | 7.1 | 7.7 | 11.2 | 11.7 |
| 30 Tagen | längs | 9.2 | 8.7 | 7.5 | 11.0 | 12.0 |
|  | quer | 9.2 | 7.8 | 7.7 | 10.5 | 11.2 |

| Reissdehnung in % | | E | F | G | H | I |
|---|---|---|---|---|---|---|
| Original | längs | 162 | 132 | 163 | 241 | 237 |
|  | quer | 434 | 304 | 400 | 525 | 521 |
| 10 Tagen | längs | 109 | 71 | 12 | 88 | 75 |
|  | quer | 35 | 7.4 | 6.7 | 25 | 15 |
| 20 Tagen | längs | 38 | 11 | 6.3 | 14 | 13 |
|  | quer | 9.2 | 4.7 | 4.2 | 8.2 | 6.3 |
| 25 Tagen | längs | 9.4 | 7.7 | 5.4 | 9.1 | 7.5 |
|  | quer | 6.2 | 4.0 | 3.9 | 6.2 | 4.9 |
| 30 Tagen | längs | 7.1 | 5.4 | 4.3 | 7.4 | 5.0 |
|  | quer | 5.1 | 3.8 | 3.7 | 4.3 | 4.2 |

7

Veränderung der Reisskraft und der Reissdehnung von Film D bei 70˚C und 75˚C

Tabelle 2b

| Reisskraft in N | | 70°C | 75°C |
|---|---|---|---|
| Original | längs | 19,2 | 19,2 |
| | quer | 19,0 | 19,0 |
| 6 Tagen | längs | 15,4 | 15,2 |
| | quer | 12,4 | 13,6 |
| 10 Tagen | längs | 13,6 | 14,4 |
| | quer | 12,9 | 13,8 |
| 15 Tagen | längs | 14,1 | 11,7 |
| | quer | 12,9 | 12,1 |
| 20 Tagen | längs | 14,1 | 8,6 |
| | quer | 13,7 | 10,8 |

| Reissdehnung in % | | | |
|---|---|---|---|
| Original | längs | 232 | 232 |
| | quer | 531 | 531 |
| 6 Tagen | längs | 103 | 42 |
| | quer | 86 | 12 |
| 10 Tagen | längs | 41 | 9 |
| | quer | 14 | 8 |
| 15 Tagen | längs | 18 | 4,4 |
| | quer | 10 | 4,3 |
| 20 Tagen | längs | 11 | 3,4 |
| | quer | 7 | 3,6 |

Abbau unter Kompostbedingungen

Tabelle 3

| Reisskraft in N | | A | B | C | D |
|---|---|---|---|---|---|
| Original | längs | 30.1 | 19.4 | 26.7 | 20.6 |
| | quer | 28.5 | 15.7 | 26.8 | 16.0 |
| 3 Wochen | längs | 29.7 | 19.2 | 25.1 | 19.9 |
| | quer | 28.0 | 15.4 | 15.4 | 15.5 |
| 7 Wochen | längs | 29.2 | 20.8 | 21.3 | 20.1 |
| | quer | 28.3 | 14.3 | 22.2 | 12.6 |
| 13 Wochen | längs | 30.2 | 18.5 | 25.0 | 19.2 |
| | quer | 27.6 | 14.0 | 21.7 | 11.5 |
| 20 Wochen | längs | 29.5 | 18.4 | 22.0 | 18.9 |
| | quer | 27.7 | 13.2 | 16.1 | 12.7 |

| Reissdehnung in % | | A | B | C | D |
|---|---|---|---|---|---|
| Original | längs | 390 | 282 | 286 | 253 |
| | quer | 515 | 752 | 638 | 667 |
| 3 Wochen | längs | 385 | 231 | 247 | 190 |
| | quer | 500 | 476 | 206 | 437 |
| 7 Wochen | längs | 370 | 170 | 107 | 128 |
| | quer | 480 | 314 | 534 | 143 |
| 13 Wochen | längs | 400 | 252 | 198 | 205 |
| | quer | 510 | 357 | 534 | 114 |
| 20 Wochen | längs | 385 | 152 | 153 | 174 |
| | quer | 495 | 263 | 570 | 300 |

Aus den Resultaten der beiliegenden Tabellen ist eindeutig die Synergiewirkung der Komponenten a), b) und c) auf den Abbau von Polyäthylenpolymeren ersichtlich, sowie die katalytische Wirkung des zusätzlichen Übergangsmetalles.

9

**Patentansprüche**

1. Unter dem Einfluss von Wärme und/oder von ultraviolettem Licht und/oder Sonnenlicht und/oder unter Kompostierbedingungen abbaubare, thermoplastische Kunststoffzusammensetzung, deren polymere Komponente thermoplastische Polymere von $\alpha$ – Olefinen, insbesondere Polyäthylen oder Aethylenco – polymere, umfasst, dadurch gekennzeichnet, dass die Zusammensetzung folgende abbaufördernde Zusätze enthält :
   a) eine biologisch abbaubare Substanz,
   b) eine in der Zusammensetzung lösliche, gegebenenfalls komplexe Eisenverbindung, welche als Intiator wirkt und den weiteren Abbau fördert,
   c) eine oxidierbare Substanz mit einer oder mehreren Doppelbindungen, welche als Abbauförderer und als Kettenspalter wirkt, wobei diese Substanz eine Fettsäure, ein Fettsäureester oder ein Gemisch davon ist.

2. Zusammensetzung nach Patentanspruch 1, dadurch gekennzeichnet, dass der Gehalt an Komponente a) 2 bis 40 Gew. – %, vorzugsweise 10 bis 16 Gew. – % und der Gehalt an Komponente b) 0,01 bis 5 Gew. – %, vorzugsweise 0,15 bis 0,5 Gew. – %, bezogen auf die Zusammensetzung, beträgt.

3. Zusammensetzung nach Patentanspruch 1 oder 2, dadurch gekennzeichnet, dass der Gehalt an Komponente c) bis zu 5 Gew. – %. vorzugsweise 0,5 bis 1,5 Gew. – %, bezogen auf die Zusammen – setzung, beträgt.

4. Zusammensetzung nach einem der Patentansprüche 1 bis 3, dadurch gekennzeichnet, dass Kompo – nente a) eine natürliche Stärke, eine verätherte oder veresterte Stärke oder ein hydrophob modifiziertes Derivat davon ist.

5. Zusammensetzung nach einem der Patentansprüche 1 bis 4, dadurch gekennzeichnet, dass die Komponente c) aus einem oder mehreren Bestandteilen von Sojaöl besteht oder diese enthält.

6. Zusammensetzung nach einem der Patentansprüche 1 bis 5, dadurch gekennzeichnet, dass sie ausserdem eine weitere gegebenenfalls komplexe Verbindung eines Uebergangsmetalles mit Ausnah – me von Eisen als Katalysator enthält.

7. Zusammensetzung nach Patentanspruch 6, dadurch gekennzeichnet, dass der Gehalt an zusätzlicher Uebergangsmetallverbindung mindestens 0,005 Gew. – %, vorzugsweise 0,005 bis 1,0 Gew. – %, ins – besondere 0,01 bis 0,05 Gew. – %, bezogen auf die Zusammensetzung, beträgt.

**Claims**

1. Thermoplastic composition which is degradable on exposure to heat and/or ultra – violet light and/or sunlight and/or under composting conditions, whose polymeric component comprises thermoplastic polymers of $\alpha$ – olefins, in particular polyethylene or ethylene copolymers, characterised in that the composition contains the following degradation – promoting additives:
   a) a biodegradable substance,
   b) an optionally complex iron compound which is soluble in the composition, acts as an initiator and promotes further degradation,
   c) an oxidisable substance containing one or more double bonds which acts as a degradation promoter and as a chain breaker, this substance being a fatty acid, a fatty acid ester or a mixture thereof.

2. Composition according to Patent Claim 1, characterised in that the content of component a) is from 2 to 40% by weight, preferably from 10 to 16% by weight, and the content of component b) is from 0.01 to 5% by weight, preferably from 0.15 to 0.5% by weight, based on the composition.

3. Composition according to Patent Claim 1 or 2, characterised in that the content of component c) is up to 5% by weight, preferably from 0.5 to 1.5% by weight, based on the composition.

10

**4.** Composition according to one of Patent Claims 1 to 3, characterised in that component a) is a natural starch, an etherified or esterified starch or a hydrophobically modified derivative thereof.

**5.** Composition according to one of Patent Claims 1 to 4, characterised in that component c) comprises or contains one or more constituents of soya oil.

**6.** Composition according to one or more of Patent Claims 1 to 5, characterised in that it also contains a further optionally complex compound of a transition metal, with the exception of iron, as catalyst.

**7.** Composition according to Patent Claim 6, characterised in that the content of the additional transition − metal compound is at least 0.005% by weight, preferably from 0.005 to 1.0% by weight, in particular from 0.01 to 0.05% by weight, based on the composition.

**Revendications**

**1.** Composition de matières thermoplastiques dégradable sous l'action de la chaleur et/ou de la lumière ultraviolette et/ou de la lumière solaire et/ou dans des conditions de compostage, dont le composant polymère comprend des polymères thermoplastiques d'α − oléfines, en particulier des copolymères à base de polyéthylène ou d'éthylène, caractérisée en ce que la composition contient les additifs promouvant la dégradation suivants:
a) une substance biodégradable,
b) une liaison de fer, éventuellement complexe, soluble dans la composition, qui agit comme initiateur et promeut la dégradation plus avancée,
c) une substance oxydable, avec une ou plusieurs liaisons doubles, qui agit comme promoteur de dégradation et agent de fission en chaîne, cette substance étant un acide gras, un ester d'acide gras ou un mélange de ceux − ci.

**2.** Composition suivant la revendication 1, caractérisée en ce que la teneur en composant a) est de 2 à 40 % en poids, de préférence de 10 à 16 % en poids et que la teneur en composant b) est de 0,01 à 5 % en poids, de préférence de 0,15 à 0,5 % en poids, par rapport à la composition.

**3.** Composition suivant la revendication 1 ou 2, caractérisée en ce que la teneur en composant c) est de jusqu'à 5 % en poids, de préférence de 0,5 à 1,5 % en poids, par rapport à la composition.

**4.** Composition suivant l'une des revendications 1 à 3, caractérisée en ce que le composant a) est un amidon naturel, un amidon éthérifié ou estérifié ou un dérivé de celui − ci modifié de manière hydrophobe.

**5.** Composition suivant l'une des revendications 1 à 4, caractérisée en ce que le composant c) consiste en un ou plusieurs éléments d'huile de soja ou contient ceux − ci.

**6.** Composition suivant l'une des revendications 1 à 5, caractérisée en ce qu'elle contient en outre, comme catalyseur, une autre liaison, éventuellement complexe, d'un métal de transition, à l'exception du fer.

**7.** Composition suivant la revendication 6, caractérisée en ce que la teneur en liaison de métal de transition additionnelle est d'au moins 0,005 % en poids, de préférence de 0,005 à 1,0 % en poids, en particulier de 0,01 à 0,05 % en poids, par rapport à la composition.